Europäisches Patentamt

European Patent Office

Office européen des brevets

(11) Publication number: **0 045 981**
**B1**

## EUROPEAN PATENT SPECIFICATION

(45) Date of publication of patent specification: **23.05.84**

(21) Application number: **81108254.4**

(22) Date of filing: **18.06.80**

(60) Publication number of the earlier application in accordance with Art. 76 EPC: **0 024 100**

(51) Int. Cl.³: **F 16 H 37/08, B 60 K 17/16**

(54) Planetary differential.

(30) Priority: **20.08.79 US 68241**

(43) Date of publication of application:
**17.02.82 Bulletin 82/07**

(45) Publication of the grant of the patent:
**23.05.84 Bulletin 84/21**

(84) Designated Contracting States:
**BE DE FR GB IT**

(56) References cited:
**US-A-2 648 236**
**US-A-3 044 320**
**US-A-3 059 746**
**US-A-3 383 953**
**US-A-3 535 954**

(73) Proprietor: **CATERPILLAR TRACTOR CO.**
**100 Northeast Adams Street**
**Peoria Illinois 61629 (US)**

(72) Inventor: **Coutant, Alan Robert**
**13417 N. Dover Lane**
**Chillicothe Illinois 61523 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

EP 0 045 981 B1

## Description

The invention relates to a planetary differential.

A differential, as is commonly known, allows different speeds and torques to be applied through one wheel or output relative to another. This permits a wheeled vehicle to be turned about one wheel which essentially becomes fixed while the other wheel moves around the fixed wheel. An example of a transaxle incorporating a differential is described in U.S. Patent Specification No. 1,395,668. The transaxle disclosed uses planetary gear assemblies which receive rotational input through a shaft driven at one of two transmission speeds. Forward or reverse is selected by controllably braking a ring gear of a preselected planetary assembly. Differential action is taken through or across counter-rotating shafts which, in effect, "brake" the ring gears of the forward planetary assemblies while permitting relative rotation therebetween. A differential utilizing a single planetary gear assembly is disclosed in U.S. Patent Specification No. 3,323,389. A differential having two planetary gear assemblies, tied one to the other but resulting in oppositely rotating output elements is disclosed in Gear Trains by H. E. Merritt which was published in 1947 by Sir Isaac Pitman & Sons Ltd.

Differentials are not normally used in track-laying vehicles, they may, however, be incorporated in certain instances, particularly to provide spot turning action in a track-laying vehicle. Such mechanisms are disclosed in U.S. Patent Specifications Nos. 3,044,320 and 3,535,954.

U.S. Specification No. 2,648,236 illustrates a planetary differential comprising a first planetary gear assembly having a first ring element, a first sun element, and a first carrier element; a second planetary gear assembly coaxial with the first planetary gear assembly and having a second ring element, a second sun element, and a second carrier element; and first and second output members connected to · respective first ones of the elements of the first and second planetary gear assemblies, wherein a second one of the elements of the first planetary gear assembly is connected for joint rotation to a second one of the elements of the second planetary gear assembly, a rotary input member is connected to the remaining third one of the elements of the first planetary gear assembly, and the remaining third one of the elements of the second planetary gear assembly is held stationary relative to a differential housing. Such a differential is hereinafter referred to as of the kind described. This differential although allowing differential action makes no provision for enabling different output speeds of the output members to be obtained.

In accordance with the present invention, a planetary differential of the kind described is characterised in that drive means for selectively driving the input member at different speeds is provided, the drive means including a third planetary gear assembly coaxial with the first and second planetary gear assemblies, whereby the drive means and first and second planetary gear assemblies continually drive the output members at equal levels of torque and at a reduction speed ratio.

With this arrangement a particularly compact construction is provided which enables different speeds to be obtained and which is particularly useful in small vehicles, such as utility tractors, where space is frequently limited.

Two examples, of differentials in accordance with the present invention are illustrated in the accompanying drawings, in which:—

Figure 1 is a diagrammatic view of one example showing the planetary elements on only one side of the rotational axis for simplicity; and,

Figure 2 is a diagrammatic view, similar to Figure 1, of a second example.

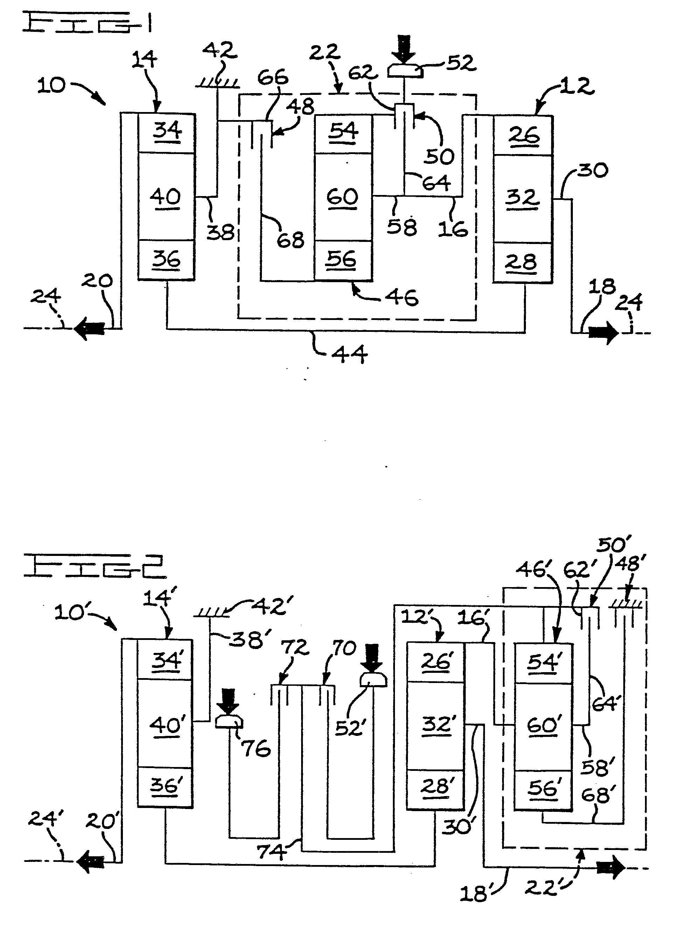

A multi-speed planetary differential 10 is shown in Figure 1 in simplified form the differential having first and second interconnected planetary gear sets or assemblies 12, 14. A single rotary input member 16 provides the input power path to these two planetary gear sets 12, 14, and first and second output members 18 and 20 provide the opposite output power paths. The differential includes planetary means 22 for selectively driving the input member at either of two speeds, while permitting the first and second planetary gear sets to drive the output members at equal levels of torque. These output members are substantially aligned on a vehicle cross drive axis 24 disposed normal to the usual forward and reverse direction of vehicle travel, and drive the usual ground-engaging members, not shown, such as a pair of oppositely disposed wheels. In the instant example the planetary means 22 is located between the first and second planetary gear sets and is concentrically aligned therewith on the rotational axis 24.

The first planetary gear set 12 includes first ring, sun and carrier elements 26, 28 and 30 of the usual type wherein a plurality of similar planet elements 32 are rotatably mounted on the carrier element and are in intermeshing engagement with the ring and sun elements. In Fig. 1 the carrier element 30 is connected for joint rotation to the first or right output member 18. The second planetary gear set 14 also includes second ring, sun and carrier elements 34, 36 and 38, and a plurality of planet elements 40 rotatably mounted in equally spaced peripheral relationship on the second carrier element 38. The second ring element 34 is connected for joint rotation to the second or left output member 20.

The second carrier element 38 is effectively continually grounded or held stationary with respect to a differential housing 42 as can be appreciated by reference to the embodiment illustrated in Fig. 1. Moreover, the first and second sun elements 28, 36 are connected together for joint rotation by a cross shaft 44. And, in the broadest aspects of the construction illustrated, the planetary means 22 can provide either a low speed step or a high speed step to the input member 16 in a compact and economical manner.

More specifically, the planetary means 22 of Figure 1 includes a third planetary gear set 46, a brake assembly 48, a clutch assembly 50, and an input transfer gear 52 concentrically supported by the housing 42 on the transverse axis 24 by suitable bearings, not shown, in a conventional manner. The third planetary gear set has third ring, sun and carrier elements 54, 56 and 58 and a third plurality of planet elements 60 rotatably mounted on the third carrier element 58 and in meshing engagement with the third ring and sun elements. As can be noted from the drawing, third carrier element 58 is connected for joint rotation with both the input member 16 and the first ring element 26. Moreover, the clutch assembly 50 has a clutch housing 62 which is rotatably driven by the input gear 52 and is connected to rotate with the third ring element 54. When actuated or engaged, to provide a high speed step, the clutch assembly 50 will effectively directly connect for joint rotation the third ring element 54 and the third carrier element 58 through one or more annular clutch members 64 connected to rotate with the third carrier element.

The brake assembly 48 includes a stationary brake housing 66 connected to the stationary second carrier element 38 and to the differential housing 42. When the brake assembly 48 is engaged, to provide a low speed step, a brake member 68 connected to the third sun element 56 is coupled to the stationary brake housing 66.

A second multi-speed planetary differential 10' is illustrated diagrammatically in Figure 2 which is a variation of the differential 10 shown in Figure 1. Those elements common to the first example are identified by similar reference numbers with an appended prime symbol. The differential 10' differs by having the third planetary gear set 46' on the outside of the first and second planetary gear sets 12' and 14' rather than between them. A further distinction is the incorporation of a dual set of input clutch assemblies 70 and 72 between the first and second planetary gear sets which permits two different input gear power paths to the planetary means 22'. More specifically, the first input clutch assembly 70 is effective when engaged to connect the input transfer gear 52' to the clutch housing 62' and third ring element 54' through a central rotary member 74. Alternatively, the second input clutch assembly 72 is effective when engaged to connect a second input transfer gear 76 to the central rotary member 74 and to the clutch housing 62' and third ring element 54' for joint rotation. Since the gear 76 is of lesser diameter than the gear 52', and either can be easily connected to an associated transmission, not shown, it is apparent that two levels of gear reduction can be provided with the differential 10' prior to reaching the planetary means 22'.

The input gear 52 shown in Figure 1, and the input gears 52', 76 shown in Figure 2 may be connected to a suitable driving direction selection mechanism such as is illustrated in our co-pending European Application No. 80302056.9 (Publication No. 0024100).

It will be readily apparent to one skilled in the art that the first and second planetary gear assemblies 12, 14; 12', 14' must be of such a relationship that the rotational input provided from the respective input gears 52; 52', 76 will be transmitted through each of the planetary gear assemblies to provide a common rotational orientation and speed of the first and second output members 18, 20; 18', 20' in order to drive both of the members simultaneously in the same direction and speed. A certain amount of gear reduction can also be taken in the planetary gear assemblies in the examples shown. Such planetary relationships can be readily calculated by one skilled in the art through comparison of the relationships of the gears in the transmission.

Differential operation of the first and second planetary gear assemblies 12, 14 of the Figure 1 example will briefly be discussed. For example, assume that the member 18 substantially ceases to rotate owing to the vehicle turning a corner about a wheel associated with the member. If the member 18 is substantially stopped from rotation, the first carrier element 30 is similarly stopped. This causes a proportionally faster rotation of the planet elements 32 of the first planetary gear assembly 12 owing to the continued action of the rotational input on the ring element 26. The result is a faster rotation of the sun element 28 and the interconnected shaft 44 and the sun element 36 of the second planetary gear assembly 14. This faster rotation tends to correspondingly cause faster rotation of the second planet elements 40 to increase the rotational speed through the second ring element 34 to the second output member 20 which provides a differential action between the two wheels of the vehicle. Similarly, differential action will be provided between the two wheels if the wheel associated with the second member 20 is substantially stopped from rotation when the vehicle turns a corner about the wheel.

The differential provides for additional add on speeds or different types of speed reduction, for example, to further adapt the differential to a variety of applications. This compact arrangement, in association with small vehicles particularly, will maximize useage of available space and provide a lightweight transmission for such vehicles. The result is to substantially solve many of the problems associated with the necessity of positioning a differential in a small space.

## Claims

1. A planetary differential (10) comprising a first planetary gear assembly (12) having a first ring element (26), a first sun element (28), and a first carrier element (30); a second planetary gear assembly (14) coaxial with the first planetary gear assembly (12) and having a second ring element (34), a second sun element (36), and a second carrier element (38); first and second output members (18, 20) connected to respective first ones of the elements (26, 28, 30, 34, 36, 38) of the first and second planetary gear assemblies (12, 14), wherein a second one of the elements (26, 28, 30) of the first planetary gear assembly (12) is connected for joint rotation to a second one (34, 36, 38) of the elements of the second planetary gear assembly (14), a rotary input member (16) is connected to the remaining third one of the elements (26, 28, 30) of the first planetary gear assembly, and the remaining third one of the elements (34, 36, 38) of the second planetary gear assembly (14) is held stationary relative to a differential housing, characterized in that drive means (22) for selectively driving the input member (16) at different speeds is provided, the drive means including a third planetary gear assembly (46) coaxial with the first and second planetary gear assemblies (12, 14), whereby the drive means (22) and first and second planetary gear assemblies (12, 14) continually drive the output members (18, 20) at equal levels of torque and at a reduction speed ratio.

2. A planetary differential (10) according to claim 1, wherein the input member (16) is connected for joint rotation with the first ring element (26).

3. A planetary differential (10) according to claim 1 or claim 2, wherein the drive means (22) includes a brake assembly (48), a third sun element (56) of the third planetary gear assembly being selectively capable of being held stationary relatively to the differential housing by the brake assembly (48).

4. A planetary differential (10) according to any of claims 1 to 3, wherein the drive means (22) includes a clutch assembly (50), a third ring element (54) and a third carrier element (58) of the third planetary gear assembly being selectively capable of being jointly rotated on actuation of the clutch assembly (50).

5. A planetary differential (10) according to any of the preceding claims, wherein the third planetary gear assembly (46) is located between the first and second planetary gear assemblies (12, 14).

6. A planetary differential (10) according to any of claims 1 to 4, wherein the first planetary gear assembly (12') is located between the second and third planetary gear assemblies (14' 46').

7. A planetary differential (10) according to any of the preceding claims, wherein the second carrier element (38) is continually held stationary relatively to the differential housing.

8. A planetary differential (10) according to any of the preceding claims, wherein the first and second sun elements (28, 36) are connected for joint rotation.

9. A planetary differential (10) according to any of the preceding claims, wherein the third planetary gear assembly (46) has a carrier element (58) connected for joint rotation with the first ring element (26).

10. A planetary differential (10) according to any of the preceding claims, further including rotating clutch means (70, 72) coaxial with, and positioned between, the first and second planetary gear assemblies (12', 14') for selectively connecting one of at least two input transfer gears (52', 76) to the drive means (22) to drive the drive means at different speeds.

## Revendications

1. Différentiel planétaire (10) comprenant un premier ensemble d'engrenages planétaires (12) ayant une première couronne (26), un premier planétaire (28) et un premier élément porteur (30); un second ensemble d'engrenages planétaires (14) coaxial avec le premier ensemble d'engrenages planétaires (12) et ayant une second couronne (34) un second planétaire (36) et un second élément porteur (38); un premier et un second organes de sortie (18, 20) reliés respectivement à un premier des éléments (26, 28, 30, 34, 36, 38) des premier et second ensembles d'engrenages planétaires (12, 14), dans lequel un second des éléments (26, 28, 30) du premier ensemble d'engrenages planétaires (12) est accouplé en vue d'une rotation conjointe à un second des éléments (34, 36, 38) du second ensemble d'engrenages planétaires (14), un organe rotatif d'entrée (16) est accouplé au troisième des éléments (26, 28, 30) du premier ensemble d'engrenages planétaires, et le troisième des éléments (34, 36, 38) du second ensemble d'engrenages planétaires (14) est maintenu fixe par rapport à un carter du différentiel, caractérisé en ce qu'un moyen d'entraînement (22) pour entraîner sélectivement l'organe d'entrée (16) à des vitesses différentes est prévu, ce moyen d'entraînement comprenant un troisième ensemble d'engrenages planétaires (46) coaxial avec les premier et second ensembles d'engrenages planétaires (12, 14), le moyen d'entraînement (22) et les premier et second ensembles d'engrenages planétaires (12, 14) entraînant ainsi continuellement les organes de sortie (18, 20) à des niveaux égaux de couple et avec un rapport de réduction de vitesse.

2. Différentiel planétaire (10) selon la revendication 1, dans lequel l'organe d'entrée (16) est connecté en vue d'une rotation conjointe avec la première couronne (26).

3. Différentiel planétaire (10) selon la revendiation 1 ou 2, dans lequel le moyen d'entraînement (22) comprend un ensemble de frein (48), un troisième planétaire (56) du troisième ensemble d'engrenages planétaires étant sélectivement capable d'être maintenu fixe par rapport au carter du différentiel par l'ensemble de frein (48).

4. Différentiel planétaire (10) selon l'une quelconque des revendications 1 à 3, dans lequel le moyen d'entraînement (22) comprend un ensemble d'embrayage (50), une troisième couronne (54) et un troisième élément porteur (58) du troisième ensemble d'engrenages planétaires étant sélectivement capables d'être entraînés conjointement lors de l'actionnement de l'ensemble d'embrayage (50).

5. Différentiel planétaire (10) selon l'une quelconque des revendications précédentes, dans lequel le troisième ensemble d'engrenages planétaires (46) est disposé entre les premier et second ensembles d'engrenages planétaires (12, 14).

6. Différentiel planétaire (10) selon l'une quelconque des revendications 1 à 4, dans lequel le premier ensemble d'engrenages planétaires (12') est disposé entre les second et troisième ensembles d'engrenages planétaires (14, 46').

7. Différentiel planétaire (10) selon l'une quelconque des revendications précédentes, dans lequel le second élément porteur (38) est continuellement maintenu fixe par rapport au carter du différentiel.

8. Différentiel planétaire (10) selon l'une quelconque des revendications précédentes, dans lequel les premier et second planétaires (28, 36) sont connectés en vue d'une rotation conjointe.

9. Différentiel planétaire (10) selon l'une quelconque des revendications précédentes, dans lequel le troisième ensemble d'engrenages planétaires (46) a son élément porteur (58) connecté en vue d'une rotation conjointe avec la première couronne (26).

10. Différentiel planétaire (10) selon l'une quelconque des revendications précédentes, comportant en outre des moyens rotatifs d'embrayage (70, 72) coaxiaux avec et disposés entre les premier et second ensemble d'engrenages planétaires (12', 14') pour connecter sélectivement l'une au moins des roues dentées de transfert d'entrée (52', 76) au moyen d'entraînement (22) pour entraîner le moyen d'entraînement à des vitesses différentes.

**Patentansprüche**

1. Planetendifferential (10) mit einer ersten Planetengetriebeanordnung (12) mit einem ersten Ringelement (26), einem ersten Sonnenelement (28) und einem ersten Trägerelement (30), einer zweiten Planetengetriebeanordnung (14) koaxial mit der ersten Planetengetriebeanordnung (12) und mit einem zweiten Ringelement (34), einem zweiten Sonnenelement (36) und einem zweiten Trägerelement (38), ersten und zweiten Ausgangsgliedern (18, 20), verbunden mit den jeweiligen ersten der Elemente (26, 28, 30, 34, 36, 38) der ersten und zweiten Planetengetriebeanordnungen (12, 14), wobei ein zweites der Elements (26, 28, 30) der ersten Planetengetriebeanordnung (12) zur gemeinsamen Drehung mit einem zweiten (34, 36, 38) der Elemente der zweiten Planetengetriebeanordnung (14) verbunden ist, einem Dreheingangsglied (16), verbunden mit dem verbleibenden dritten der Elemente (26, 28, 30) der ersten Planetengetriebeanordnung, und wobei das verbleibende dritte der Elemente (34, 36, 38) der zweiten Planetengetriebeanordnung (14) stationär bezüglich eines Differentialgehäuses gehalten ist, dadurch gekennzeichnet, daß die Antriebsmittel (22) zum selektiven Antrieb des Eingangsglieds (16) mit unterschiedlichen Drehzahlen vorgesehen sind, daß die Antriebsmittel eine dritte Planetengetriebeanordnung (46) aufweisen, und zwar ko-axial mit den ersten und zweiten Planetengetriebeanordnungen (12, 14), wobei die Antriebsmittel (22) und die ersten und zweiten Planetengetriebeanordnungen (12, 14) kontinuierlich die Ausgangsglieder (18, 20) mit gleichen Drehmonentniveaus und einem verminderten Drehzahlverhältnis antreiben.

2. Planetendifferential (10) nach Anspruch 1, wobei das Eingangsglied (16) zur gemeinsamen Drehung mit dem ersten Ringelement (26) verbunden ist.

3. Planetendifferential (10) nach Anspruch 1 oder 2, wobei die Antriebsmittel (22) eine Bremsanordnung (48) aufweisen und wobei ein drittes Sonnenelement (56) der dritten Planetengetriebeanordnung selektiv stationär bezüglich des Differentialgehäuses durch die Bremsanordnung (48) gehalten werden kann.

4. Planetendifferential (10) nach einem der Ansprüche 1 bis 3, wobei die Antriebsmittel (22) eine Kupplungsanordnung (50) aufweisen, und wobei ein drittes Ringelement (54) und ein drittes Trägerelement (58) der dritten Planetengetriebeanordnung selektiv in der Lage sind, gemeinsam bei Betätigung der Kupplunsanordnung (50) verdreht zu werden.

5. Planetendifferential (10) nach einem der vorhergehenden Asprüche, wobei die dritte Planetengetriebeanordnung (46) zwischen der ersten und zweiten Planetengetriebeanordnungen (12, 14) angeordnet ist.

6. Planetendifferential (10) nach einem der Ansprüche 1 bis 4, wobei die erste Planetengetriebeanordnung (12') zwischen den zweiten und dritten Planetengetriebeanordnungen (14', 46') angeordnet ist.

7. Planetendifferential (10) nach einem der vorhergehenden Ansprüche, wobei das zweite Trägerelement (38) kontinuierlich stationär bezüglich des Differentialgehäuses gehalten ist.

8. Planetendifferential (10) nach einem der vorhergehenden Ansprüche, wobei die ersten und zweiten Sonnenelemente (28, 36) zur gemeinsamen Drehung verbunden sind.

9. Planetendifferential (10) nach einem der vorhergehenden Ansprüche, wobei die dritte Planetengetriebeanordnung (46) ein Trägerelement (58) zur gemeinsamen Drehung mit dem ersten Ringelement (26) verbunden aufweist.

10. Planetendifferential (10) nach einem der vorhergehenden Ansprüche, mit Drehkupplungsmitteln (70, 72) koaxial zu und angeordnet zwischen den ersten und zweiten Planetengetriebeanordnungen (12', 14') zur selektiven Verbindung eines von mindestens zwei Eingangsübertragungsgetrieben (52', 76) mit den Antriebsmitteln (22) zum Antrieb der Antriebsmittel mit unterschiedlichen Drehzahlen.

FIG-1

FIG-2

1